# EUROPEAN PATENT SPECIFICATION

(11) **EP 0 949 282 B1**
(45) Date of publication and mention of the grant of the patent: **16.10.2002**
(21) Application number: 99106793.5
(22) Date of filing: 06.04.1999
(51) Int. Cl.: C08F 297/00

(54) **Process for producing isobutylene block copolymer**
Verfahren zur Herstellung von Isobutylen-Blockcopolymerisat
Procédé pour la production de copolyméres séquencé d'isobutyléne

(30) Priority: 07.04.1998 JP 9447298; 29.03.1999 JP 8669699
(43) Date of publication of application: 13.10.1999
(73) Proprietor: KANEKA CORPORATION, Osaka-shi, Osaka 530-8288 (JP)
(72) Inventor: Ozawa, Shinji 185, Shimomyokakujicho, Kyoto-shi, Kyoto 604-0024 (JP); Nakata, Toshinobu, Kobe-shi, Hyogo 673-0849 (JP); Hiiro, Tomoki, Akashi-shi, Hyogo 673-0849 (JP); Aoyama, Taizo, Takasago-shi, Hyogo 676-0025 (JP)
(74) Representative: Brehm, Hans-Peter

(56) References cited:
- EP-A- 0 921 157
- US-A- 4 946 899

## Description

### FIELD OF THE INVENTION

The present invention relates to a process for producing an isobutylene block copolymer. More particularly, the present invention relates to a process for producing an isobutylene block copolymer by polymerizing a monomer component containing isobutylene as a major monomer and a monomer component whose major monomer is not isobutylene, which process is characterized by use of a specific mixed solvent which has an advantage in industrial handling over prior art solvents, thereby producing a block copolymer giving excellent performances.

### BACKGROUND OF THE INVENTION

It is known in the art to produce an isobutylene block copolymer composed of a polymer block comprising isobutylene and a polymer block comprising an aromatic vinyl monomer by cationic polymerization of isobutylene and an aromatic vinyl monomer such as styrene. For example, U.S. Patent No. 4,946,899 discloses a process for producing an isobutylene block copolymer in a mixed solvent composed of a combination of methyl chloride and methylcyclohexane. Also, Japanese Examined Patent Publication No. 7-59601/1995 discloses a process for producing a block copolymer from isobutylene and styrene in a mixed solvent containing methylene chloride and hexane.

In these manners, a halogenated hydrocarbon having one or two carbon atoms (e.g. methyl chloride or methylene chloride) has been widely used as a solvent for cationic polymerization because, by using it particularly in combination with an aliphatic hydrocarbon, suitable dielectric constant can be provided to stabilize a growing chain end, and to give excellent solubility of the obtained polymer.

However, such a halogenated hydrocarbon having one or two carbon atoms has disadvantageous problems; e.g. it is difficult to handle therewith, and its discharge to the environment cannot be prevented in conventional treatment methods and involves use of a large apparatus or installation, thereby raising a problem of increased costs of manufacturing. For example, methylene chloride has high solubility in water of 2.0% (20°C), and recovery or separation of methylene chloride dissolved in water also involves use of a large apparatus, leading to increased costs. Therefore, these halogenated hydrocarbons having one or two carbon atoms are disadvantageous solvents for use in a large scale polymerization such as in industrial production.

On the other hand, there has been an attempt to use singly a halogenated hydrocarbon having three or more carbon atoms as a cationic polymerization solvent for producing an isobutylene block copolymer. For example, Faust et al. have made an attempt of the production of an isobutylene block copolymer composed of an isobutylene polymer block and a styrene polymer block by using 1-chlorobutane (n-butyl chloride) as a polymerization solvent [J. Macromol. Sci.-Pure Appl. Chem., A33(3), 305(1996)]. However, since it involves single use of a halogenated hydrocarbon, it is difficult to adjust the dielectric constant of the polymerization solvent system, so that the concentration of a Lewis acid or the like is limited for producing a good isobutylene block copolymer and the polymerization concentration cannot be raised due to insufficient solubility of the block copolymer.

The present invention has, in view of these circumstances, the object to provide a process for producing an isobutylene block copolymer giving good performance, by the use of a mixed solvent which has an advantage in industrial handling over prior art, in particular, over a halogenated hydrocarbon having one or two carbon atoms.

### SUMMARY OF THE INVENTION

The present invention provides a process for producing an isobutylene block copolymer, which comprises performing cationic polymerization of a monomer component containing isobutylene as a major monomer for a polymer block composed of isobutylene as a major monomer and a monomer component whose major monomer is not isobutylene for a polymer block in which major monomer is not isobutylene in the presence of a compound represented by the following general formula (1) 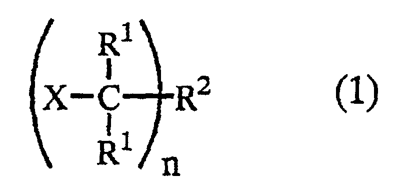 wherein plural R¹ are the same or different and represent a hydrogen atom or a monovalent hydrocarbon group having one to six carbon atoms; R² represents a monovalent or polyvalent aromatic hydrocarbon group or a monovalent or polyvalent aliphatic hydrocarbon group; X represents a halogen atom, an alkoxyl group having one to six carbon atoms, or an acyloxyl group having one to six carbon atoms; n is equal to a valence number of R² and represents an integer of one to six; and plural X may be the same or different if n is two or more:
wherein said polymerization is carried out in a mixed solvent containing a monohalogenated hydrocarbon solvent and a non-halogenated hydrocarbon solvent, said monohalogenated hydrocarbon solvent comprising a primary monohalogenated hydrocarbon having three to eight carbon atoms and/or a secondary monohalogenated hydrocarbon having three to eight carbon atoms, said non-halogenated hydrocarbon solvent comprising an aliphatic hydrocarbon and/or an aromatic hydrocarbon.

### DETAILED DESCRIPTION OF THE INVENTION

According to the present invention, a mixed solvent of a monohalogenated hydrocarbon solvent containing a primary monohalogenated hydrocarbon having three to eight carbon atoms and/or a secondary monohalogenated hydrocarbon having three to eight carbon atoms, and a non-halogenated hydrocarbon solvent containing an aliphatic hydrocarbon and/or an aromatic hydrocarbon is used as a cationic polymerization solvent for producing an isobutylene block copolymer.

The inventors of the present invention have selected primary and/or secondary monohalogenated hydrocarbons having three to eight carbon atoms as a substitution for halogenated hydrocarbons having one or two carbon atoms used in the prior art processes because of the reasons such as follows.
(1) Tertiary halogenated hydrocarbons act as a polymerization initiator, causing side reactions by production of a tertiary cation from the solvent itself as well as the objective original initiation reaction, so that they are not preferable as a cationic polymerization solvent.
(2) The less the halogen content in the halogenated hydrocarbon (i.e. the ratio of halogen weight in a molecule) is, the lower its solubility in water is and further the easier it is to decompose them. Also, if the halogenated hydrocarbon has two or less carbon atoms, the solubility in water is high, and hence it is not preferable. (The solubility in water is 2.0 wt% for methylene chloride, 0.869 wt% for 1,2-dichloroethane, 0.271 wt% for 1-chloropropane, 0.08 wt% for 1-chlorobutane, and 0.02 wt% for 1-chloropentane.)
(3) If the halogenated hydrocarbon has nine or more carbon atoms, its boiling point is high, so that a lot of energy is required in removing the solvent by distillation, thereby leading to increased costs.
(4) Monohalogenated hydrocarbons have a lower specific weight because their halogen content in a molecule is smaller than that of polyhalogenated hydrocarbons. Therefore, use of a monohalogenated hydrocarbon increases the specific weight difference between an organic phase and an aqueous phase in a water-washing step, making the separation easy.

The primary monohalogenated hydrocarbon having three to eight carbon atoms and the secondary monohalogenated hydrocarbon having three to eight carbon atoms to be used in the present invention are not specifically limited. Examples of such primary and secondary monohalogenated hydrocarbons having three to eight hydrocarbons include 1-chloropropane, 1-chloro-2-methylpropane, 1-chlorobutane, 1-chloro-2-methylbutane, 1-chloro-3-methylbutane, 1-chloro-2,2-dimethylbutane, 1-chloro-3,3-dimethylbutane, 1-chloro-2,3-dimethylbutane, 1-chloropentane, 1-chloro-2-methylpentane, 1-chloro-3-methylpentane, 1-chloro-4-methylpentane, 1-chlorohexane, 1-chloro-2-methylhexane, 1-chloro-3-methylhexane, 1-chloro-4-methylhexane, 1-chloro-5-methylhexane, 1-chloroheptane, 1-chlorooctane, 2-chloropropane, 2-chlorobutane, 2-chloropentane, 2-chlorohexane, 2-chloroheptane, 2-chlorooctane, and chlorobenzene. It is possible to use one of these alone or two or more of these in combination. For example, it is possible to use a monohalogenated solvent having three carbon atoms, a monohalogenated solvent having four carbon atoms, a combination of a monohalogenated solvent having three carbon atoms and a monohalogenated solvent having four carbon atoms, a combination of at least one of the monohalogenated hydrocarbons having four to eight carbon atoms, or the like. Among these, 1-chloropropane and/or 1-chlorobutane are preferably used in view of the solubility of the isobutylene block copolymer, the facility of decomposition, the balance of costs and others. Especially, 1-chlorobutane is preferable.

The non-halogenated aliphatic hydrocarbon and the non-halogenated aromatic hydrocarbon to be used in the present invention comprises at least one member selected from the group consisting of hexane, cyclohexane, methylcyclohexane, and ethylcyclohexane.

The polymerization solvent to be used in the present invention is a mixed solvent which is a combination of a monohalogenated hydrocarbon solvent containing a primary monohalogenated hydrocarbon having three to eight carbon atoms and/or a secondary monohalogenated hydrocarbon having three to eight carbon atoms, and a non-halogenated hydrocarbon solvent containing an aliphatic hydrocarbon and/or an aromatic hydrocarbon as mentioned above. The content of the monohalogenated hydrocarbon solvent in the mixed solvent is not specifically limited, and may be set so as to obtain dielectric constant of the solvent or solubility of the block copolymer as desired. However, the content of the monohalogenated hydrocarbon solvent is typically 10 to 98 wt%, preferably 20 to 90 wt%.

The amount of the mixed solvent to be used is determined so that the concentration of the polymer is 1 to 50 wt%, preferably 5 to 35 wt%, taking into account the viscosity of the polymer solution to be obtained and the facility in removing the heat.

The monomer component whose major monomer is not isobutylene according to the present invention, which component is for a polymer block whose major monomer is not isobutylene, refers to a monomer component having an isobutylene content of not more than 30 wt%. The isobutylene content in the monomer component whose major monomer is not isobutylene is preferably not more than 10 wt%, more preferably not more than 3 wt%.

The monomers other than isobutylene in the monomer component whose major monomer is not isobutylene according to the present invention is not specifically limited as long as it is a monomer capable of undergoing cationic polymerization. Examples of such monomers include aliphatic olefins, aromatic vinyls, dienes, vinyl ethers, silanes, vinylcarbazole, β-pinene, acenaphthylene, and others. It is possible to use one of these alone or two or more of these in combination.

The aliphatic olefin monomer to be used in the present invention is not specifically limited. Examples of such aliphatic olefin monomers include ethylene, propylene, 1-butene, 2-methyl-1-butene, 3-methyl-1-butene, pentene, hexene, cyclohexene, 4-methyl-1-pentene, vinylcyclohexene, octene, norbornene, and others.

The aromatic vinyl monomer to be used in the present invention is not specifically limited. Examples of such aromatic vinyl monomers include styrene, o-, m-, or p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethylstyrene, β-methyl-2,4-dimethylstyrene, o-, m-, or p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α-chloro-2,6-dichlorostyrene, α-chloro-2,4-dichlorostyrene, β-chloro-2,6-dichlorostyrene, β-chloro-2,4-dichlorostyrene, o-, m-, or p-t-butylstyrene, o-, m-, or p-methoxystyrene, o-, m-, or p-chloromethylstyrene, o-, m-, or p-bromomethylstyrene, styrene derivatives substituted with a silyl group, indene, vinylnaphthalene, and others.

The diene monomer to be used in the present invention is not specifically limited. Examples of such diene monomers include butadiene, isoprene, cyclopentadiene, cyclohexadiene, dicyclopentadiene, divinylbenzene, ethylidenenorbornene, and others.

The vinyl ether monomer to be used in the present invention is not specifically limited. Examples of such vinyl ether monomers include methyl vinyl ether, ethyl vinyl ether, (n-, iso)propyl vinyl ether, (n-, sec-, tert-, iso)butyl vinyl ether, methyl propenyl ether, ethyl propenyl ether, and others.

The silane compound to be used in the present invention is not specifically limited. Examples of such silane compounds include vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, γ-methacryloyloxypropyltrimethoxysilane, y-methacryloyloxypropylmethyldimethoxysilane, and others.

The monomer component whose major monomer is not isobutylene according to the present invention is preferably a monomer component containing an aromatic vinyl monomer as a major monomer in view of the balance among the physical properties, the polymerization characteristics, and others. The monomer component containing an aromatic vinyl monomer as a major monomer according to the present invention refers to a monomer component having an aromatic vinyl monomer content of not less than 60 wt%, preferably not less than 80 wt%. Here, the aromatic vinyl monomer is preferably at least one selected from the group consisting of styrene, α-methylstyrene, p-methylstyrene, and indene. In view of the costs, it is particularly preferable to use styrene, α-methylstyrene, or a mixture of these.

The monomer component containing isobutylene as a major monomer according to the present invention, which component is for a polymer block composed of isobutylene as a major monomer, may or may not contain a monomer other than isobutylene, and is a monomer component containing typically not less than 60 wt%, preferably not less than 80 wt%, of isobutylene. The monomers other than isobutylene are not specifically limited as long as they are monomers capable of undergoing cationic polymerization. For example, they may be the above-mentioned monomer and others.

The ratio of the polymer block composed of isobutylene as a major monomer and the polymer block whose major monomer is not isobutylene is not specifically limited. However, in view of various physical properties, the polymer block composed of isobutylene as a major monomer is preferably contained at 95 to 40 wt%, and the polymer block whose major monomer is not isobutylene is preferably contained at 5 to 60 wt%. In particular, the polymer block composed of isobutylene as a major monomer is more preferably contained at 85 to 50 wt%, and the polymer block whose major monomer is not isobutylene is preferably contained at 15 to 50 wt%.

The number-average molecular weight of the isobutylene block copolymer is not specifically limited. However, in view of the fluidity, the processability, and the physical properties, the number-average molecular weight of the isobutylene block copolymer is 30,000 to 500,000, more preferably 50,000 to 400,000. If the number-average molecular weight of the isobutylene block copolymer is lower than the above range, the mechanical properties are not likely to be sufficient. On the other hand, if it exceeds the above range, it is disadvantageous in view of the fluidity and the processability.

The compound represented by the above-mentioned general formula (1) acts as an initiator, and generates a carbon cation in the presence of a Lewis acid , so that it is believed to act as an initiating point in cationic polymerization. In the formula (1), plural R¹ are the same or different and represent a hydrogen atom or a monovalent hydrocarbon group having one to six carbon atoms; R² represents a monovalent or polyvalent aromatic hydrocarbon group or a monovalent or polyvalent aliphatic hydrocarbon group; X represents a halogen atom, an alkoxyl group having one to six carbon atoms, or an acyloxyl group having one to six carbon atoms; n is equal to a valence number of R² and is an integer of one to six; and plural X may be the same or different if n is two or more.

Examples of the compounds represented by the general formula (1) to be used in the present invention include (1-chloro-1-methylethyl)benzene [C₆H₅C(CH₃)₂Cl], 1,4-bis(1-chloro-1-methylethyl)benzene [1,4-Cl(CH₃)₂CC₆H₄C(CH₃)₂Cl], 1,3-bis(1-chloro-1-methylethyl)benzene [1,3-Cl(CH₃)₂CC₆H₄C(CH₃)₂Cl], 1,3,5-tris(1-chloro-1-methylethyl)benzene [1,3,5-(ClC(CH₃)₂)₃C₆H₃], 1,3-bis(1-chloro-1-methylethyl)-5-(tert-butyl)benzene [1,3-(C(CH₃)₂Cl)₂-5-(C(CH₃)₃)C₆H₃], and others.

The especially preferable one among these is bis(1-chloro-1-methylethyl)benzene [C₆H₄(C(CH₃)₂Cl)₂]. [Here, bis(1-chloro-1-methylethyl)benzene is also referred to as bis(α-chloroisopropyl)benzene, bis(2-chloro-2-propyl)benzene, or dicumyl chloride].

Further, a Lewis acid catalyst may be allowed to coexist in producing the isobutylene block copolymer. Such Lewis acids may be those capable of being used in cationic polymerization, and examples thereof include metal halides such as TiCl₄, TiBr₄, BCl₃, BF₃, BF₃ · OEt₂, SnCl₄, SbCl₅, SbF₅, WCl₆, TaCl₅, VCl₅, FeCl₃, ZnBr₂, AlCl₃, and AlBr₃, organic metal halides such as Et₂AlCl and EtAlCl₂, and others. Above all, in view of the capability as a catalyst and the industrial availability, TiCl₄, BCl₃, and SnCl₄ are preferable. The amount of the Lewis acid to be used is not specifically limited, and it can be set in view of the polymerization properties of the monomer to be used, the polymerization concentration, or the like. Typically, the Lewis acid is used in an amount of 0.1 to 100 molar equivalent, preferably 1 to 60 molar equivalent relative to the compound represented by the general formula (1).

Further, an electron donor may be optionally allowed to coexist in producing the isobutylene block copolymer. The electron donor is believed to have an effect of stabilizing the growing carbon cations in cationic polymerization, whereby a polymer having a controlled structure with a narrow molecular weight distribution is produced by addition of the electron donor. The electron donor capable of being used in the present invention is not specifically limited, and examples thereof include pyridines, amines, amides, sulfoxides, esters, metal compounds having an oxygen atom bonded to a metal atom, and others.

The amount of the components to be used may be suitably designed in accordance with the properties of the intended polymer. For example, the molecular weight of the polymer to be obtained can be controlled by the molar equivalent ratio among isobutylene and cation-polymerizable monomer other than isobutylene and the compound represented by the general formula (1). Typically, the molar equivalent ratio is set so that the number-average molecular weight of the block copolymer to be obtained is 20,000 to 500,000.

In carrying out the polymerization, the components are mixed under cooling, for example, at a temperature not less than -100°C and less than 0°C. In obtaining a balance between the energy costs and the stability of the polymerization, the particularly preferable temperature range is -80°C to -30°C.

The isobutylene block copolymer produced according to the process of the present invention is not specifically limited as long as it contains a polymer block composed of isobutylene as a major monomer and a polymer block composed of a monomer component whose major monomer is not isobutylene. For example, the isobutylene block copolymer may be any of a block copolymer having a straight-chain, branched, or star-shaped structure, a diblock copolymer, a triblock copolymer, a multi-block copolymer, and others. If the monomer component whose major monomer is not isobutylene is an aromatic vinyl monomer, a preferable block copolymer is, for example, a triblock copolymer of (a polymer block composed of the aromatic vinyl monomer as a major monomer)-(a polymer block composed of isobutylene as a major monomer)-(a polymer block composed of the aromatic vinyl monomer as a major monomer), a diblock copolymer of (a polymer block composed of the aromatic vinyl monomer as a major monomer)-(a polymer block composed of isobutylene as a major monomer), and a star block copolymer consisting of three or more arms of block copolymers comprising a polymer block composed of the aromatic vinyl monomer as a major monomer and a polymer block composed of isobutylene as a major monomer, or a mixture of two or more of these copolymers. Here, the star polymer refers to a polymer consisting of three or more straight chain polymers (i.e. arms) generally having almost the same length which are bonded, particularly, to one point, to be made up into a star-shaped form. For example, the star polymer is produced by use of an initiator having three or more initiation points.

### BEST MODES FOR CARRYING OUT THE INVENTION

Hereafter, the present invention will be explained more specifically with reference to the embodiments thereof. However, the present invention is not limited by these examples, and may be suitably changed for reducing the invention into practice as long as the gist of the invention is not changed.

The molecular weight of each of the block copolymers shown in the Examples was measured by GPC system made by Nihon Waters K.K. (column: Shodex K-804 (polystyrene gel) made by Showa Denko K.K., mobile phase : chloroform). The number-average molecular weight is represented by conversion in terms of polystyrene.

### Example 1

A 500 mL reaction vessel equipped with a stirrer was charged with 87 mL of 1-chlorobutane (dried by molecular sieves), 93 mL of hexane (dried by molecular sieves), and 0.0878 g of p-dicumyl chloride. The reaction vessel was cooled to -70°C, and then 0.0708 g of α-picoline (2-methylpyridine) and 32 mL of isobutylene were added. Further, 1.5 mL of titanium tetrachloride was added to start polymerization and the reaction was continued for two hours while stirring the solution at -70°C. Thereafter, 13.5 mL of styrene was added into the reaction solution and, after the reaction was further continued for 30 minutes, the reaction solution was put into a large amount of water to terminate the reaction.

The separation of the organic phase and the aqueous phase as visually observed showed good separation, and they were easily separated by a separatory funnel. After washing with water twice and confirming that the aqueous phase was neutral, the organic phase was poured into a large amount of methanol to precipitate a polymer, which was then vacuum-dried at 60°C for 24 hours to give an isobutylene block copolymer.

A GPC analysis of the isobutylene block copolymer showed a number-average molecular weight of 88,000 and a molecular weight distribution of 1.14. The styrene content was 25 wt%.

### Example 2

The process was carried out in the same manner as in Example 1 except that 102 mL of 1-chlorobutane and 98 mL of methylcyclohexane (dried by molecular sieves) were used as the polymerization solvent. The separation of the organic phase and the aqueous phase at the time of water-washing was found to be good.

The number-average molecular weight of the obtained isobutylene block copolymer was 101,000 and the molecular weight distribution was 1.11. The styrene content was 28 wt%. The ratio of block copolymer in the obtained polymer (calculated by fractionation based on the difference of solubility into the solvent) was 98%.

### Example 3

The process was carried out in the same manner as in Example 1 except that 88 mL of 1-chloropropane (dried by molecular sieves) and 112 mL of methylcyclohexane were used as the polymerization solvent. The separation of the organic phase and the aqueous phase at the time of water-washing was found to be good. The obtained isobutylene block copolymer showed good rubber elasticity.

### Comparative Example 1

A 500 mL reaction vessel equipped with a stirrer was charged with 76 mL of methylene chloride (dried by molecular sieves), 114 mL of hexane (dried by molecular sieves), and 0.0876 g of p-dicumyl chloride. The reaction vessel was cooled to -70°C, and then 0.0357 g of α-picoline (2-methylpyridine) and 33 mL of isobutylene were added. Further, 1.5 mL of titanium tetrachloride was added to start polymerization and the reaction was continued for one hour while stirring the solution at -70°C. Thereafter, 13.5 mL of styrene was added into the reaction solution and, after the reaction was further continued for 10 minutes, the reaction solution was put into a large amount of water to terminate the reaction.

The separation of the organic phase and the aqueous phase as visually observed showed poor separation, and a portion around the boundary of the organic phase and the aqueous phase was partly emulsified. It was difficult to separate them by a separatory funnel. After washing with water twice, the aqueous phase was not yet neutral, so that it was treated with an aqueous solution of sodium hydrogencarbonate. Thereafter, the organic phase was poured into a large amount of methanol to precipitate a polymer, which was then vacuum-dried at 60°C for 24 hours to give an isobutylene block copolymer.

A GPC analysis of the isobutylene block copolymer showed a number-average molecular weight of 102,000 and a molecular weight distribution of 1.20. The styrene content was 29 wt%. The ratio of block copolymer in the obtained polymer (calculated by fractionation based on the difference of solubility into the solvent) was 95%.

As shown above, it will be understood that the polymerization using a mixed solvent of the present invention produces a good isobutylene block copolymer having a narrow molecular weight distribution and a high ratio of block copolmer. Also, since the monohalogenated hydrocarbon used in the present invention has a low solubility in water, water-washing can be carried out easily in the post-processing step. If a halogenated hydrocarbon having one or two carbon atoms was used (methylene chloride was used in Comparative Example 1) as in the prior art, the separation of the organic phase and the aqueous phase is poor because of the high solubility in water, thereby lowering the workability of the water-washing step. Also, the molecular weight distribution of the obtained isobutylene block copolymer is wider than that obtained when the polymerization solvent of the present invention is used, so that it is disadvantageous in this respect as well.

### INDUSTRIAL APPLICABILITY

Since the present invention is constructed as shown above, it is more advantageous in industrial handling as compared with the use of halogenated hydrocarbons having one or two carbon atoms as the polymerization solvent, and the isobutylene block copolymer obtained is excellent in properties.

Since the solvent to be used in the present invention has low solubility in water, the workability in the water-washing step after the polymerization will be improved. Also, the low solubility in water means that the effluent treatment after the water-washing step can be carried out comparatively easily. These provide advantages particularly in carrying out a large-scale polymerization such as industrial production.

Furthermore, according to the production process of the present invention, it is possible to obtain an isobutylene block copolymer giving good performances such as a narrow molecular weight distribution and a high ratio of block copolymers.

## Claims

1. A process for producing an isobutylene block copolymer, which comprises performing cationic polymerization of a monomer component containing isobutylene as a major monomer for a polymer block composed of isobutylene as a major monomer and a monomer component whose major monomer is not isobutylene for a polymer block in which major monomer is not isobutylene in the presence of a compound represented by the following general formula (1) acting as an initiator and generating a carbon cation in the presence of a Lewis acid. 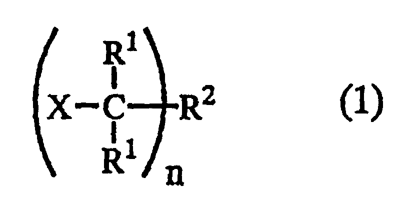 wherein
plural R¹ are the same or different and represent a hydrogen atom or a monovalent hydrocarbon group having one to six carbon atoms;
R² represents a monovalent or polyvalent aromatic hydrocarbon group or a monovalent or polyvalent aliphatic hydrocarbon group;
X represents a halogen atom, an alkoxyl group having one to six carbon atoms or an acyloxyl group having one to six carbon atoms;
n is equal to a valence number of R² and represents an integer of one to six; and
plural X may be the same or different if n is two or more;
wherein
said polymerization is carried out in a mixed solvent containing a monohalogenated hydrocarbon solvent and a non-halogenated hydrocarbon solvent, said monohalogenated hydrocarbon solvent comprising a primary monohalogenated hydrocarbon having three to eight carbon atoms and/or a secondary monohalogenated hydrocarbon having three to eight carbon atoms, said non-halogenated hydrocarbon solvent comprising at least one member selected from the group consisting of hexane, cyclohexane, methylcyclohexane and ethylcyclohexane.

2. The process according to claim 1,
wherein
said monohalogenated hydrocarbon solvent is at least one member selected from the group consisting of 1-chloropropane, 1-chloro-2-methylpropane, 1-chlorobutane, 1-chloro-2-methylbutane, 1-chloro-3-methylbutane, 1-chloro-2,2-dimethylbutane, 1-chloro-3,3-dimethylbutane, 1-chloro-2,3-dimethylbutane, 1-chloropentane, 1-chloro-2-methylpentane, 1-chloro-3-methylpentane, 1-chloro-4-methylpentane, 1-chlorohexane, 1-chloro-2-methylhexane, 1-chloro-3-methylhexane, 1-chloro-4-methylhexane, 1-chloro-5-methylhexane, 1-chloroheptane, 1-chlorooctane, 2-chloropropane, 2-chlorobutane, 2-chloropentane, 2-chlorohexane, 2-chloroheptane, 2-chlorooctane and chlorobenzene.

3. The process according to claim 2,
wherein
said monohalogenated hydrocarbon solvent is at least one member selected from the group consisting of 1-chloropropane and 1-chlorobutane.

4. The process according to claim 3,
wherein
said monohalogenated hydrocarbon solvent is 1-chlorobutane.

5. The process according to claim 1,
wherein
said non-halogenated hydrocarbon solvent is hexane and/or methylcyclohexane.

6. The process according to anyone of claims 1 to 5,
wherein
said compound represented by the general formula (1) is bis(1-chloro-1-methylethyl)benzene [C₆H₄ (C(CH₃)₂ Cl₂)].

7. The process according to anyone of claims 1 to 6
wherein
said monomer component whose major monomer is not isobutylene is a monomer component containing an aromatic vinyl monomer as a major monomer.

8. The process according to claim 7,
wherein
said aromatic vinyl monomer is at least one member selected from the group consisting of styrene, p-methylstyrene, α-methylstyrene and indene.

9. The process according to claim 7 or 8,
wherein
said isobutylene block copolymer is at least one member selected from the group consisting of a triblock copolymer of (a polymer block composed of the aromatic vinyl monomer as a major monomer)-(a polymer block composed of isobutylene as a major monomer)-(a polymer block composed of the aromatic vinyl monomer as a major monomer), a diblock copolymer of (a polymer block composed of the aromatic vinyl monomer as a major monomer)-(a polymer block composed of isobutylene as a major monomer), and a star block copolymer consisting of three or more arms of block copolymers comprising a polymer block composed of the aromatic vinyl monomer as a major monomer and a polymer block composed of isobutylene as a major monomer.

## Patentansprüche

1. Verfahren zur Herstellung eines Isobutylen-Blockcopolymer,
durch kationische Polymerisation
- einer Monomerkomponente, die Isobutylen als ein Hauptmonomer enthält, zur Erzeugung eines Polymersegmentes, das hauptsächlich aus monomerem Isobutylen erhalten ist, und
- einer weiteren Monomerkomponente, deren Hauptmonomer nicht Isobutylen ist, zur Erzeugung eines Polymersegmentes, dessen Hauptbestandteil nicht aus monomerem Isobutylen erhalten ist,
- in Gegenwart einer Verbindung
-- welche der nachfolgenden allgemeinen Formel (1) entspricht,
-- welche als Initiator wirkt, und
-- welche in Gegenwart einer Lewis-Säure ein Kohlenstoffkation liefert, 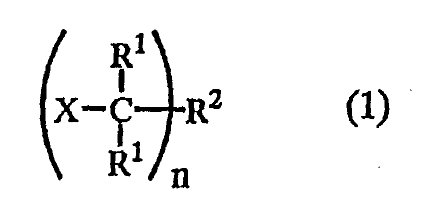
wobei
mehrere Reste R¹ gleich oder verschieden sind und stehen für ein Wasserstoffatom oder für eine einwertige C₁₋₆-Kohlenwasserstoffgruppe;
R₂ steht für eine ein- oder mehrwertige aromatische Kohlenwasserstoffgruppe oder für eine ein- oder mehrwertige aliphatische Kohlenwasserstoffgruppe;
X steht für ein Halogenatom, für eine C₁₋₆-Alkoxylgruppe oder für eine C₁₋₆-Acyloxylgruppe;
"n" entspricht der Wertigkeit der Gruppe R² und ist eine ganze Zahl von eins bis sechs; und
mehrere Reste X können gleich oder verschieden sein, sofern "n" einen Wert von zwei oder mehr hat;
**dadurch gekennzeichnet, dass**
diese Polymerisation in einem gemischten Lösemittel durchgeführt wird, das ein monohalogeniertes Kohlenwasserstoff-Lösemittel und ein halogenfreies Kohlenwasserstsoff-Lösemittel enthält,
wobei dieses monohalogenierte Kohlenwasserstoff-Lösemittel ein primärer, monohalogenierter C₃₋₈-Kohlenwasserstoff und/oder ein sekundärer monohalogenierter C₃₋₈-Kohlenwasserstoff ist, und
wobei dieses halogenfreie Kohlenwasserstoff-Lösemittel wenigstens ein Lösemittel ist, ausgewählt aus Hexan, Cyclohexan, Methylcyclohexan und Ethylcyclohexan.

2. Verfahren nach Anspruch 1,
**dadurch gekennzeichnet, dass**
dieses monohalogenierte Kohlenwasserstoff-Lösemittel wenigstens ein Lösemittel ist, ausgewählt aus 1-Chlorpropan, 1-Chlor-2-methylpropan, 1-Chlorbutan, 1-Chlor-2-methylbutan, 1-Chlor-3-methylbutan, 1-Chlor-2,2-dimethylbutan, 1-Chlor-3,3-dimethylbutan, 1-Chlor-2,3-dlmethylbutan, 1-Chlorpentan, 1-Chlor-2-methylpentan, 1-Chlor-3-methylpentan, 1-Chlor-4-methylpentan, 1-Chlorhexan, 1-Chlor-2-methylhexan, 1-Chlor-3-methylhexan, 1-Chlor-4-methylhexan, 1-Chlor-5-methylhexan, 1-Chlorheptan, 1-Chloroctan, 2-Chlorpropan, 2-Chlorbutan, 2-Chlorpentan, 2-Chlorhexan, 2-Chlorheptan, 2-Chloroctan und Chlorbenzol.

3. Verfahren nach Anspruch 2,
**dadurch gekennzeichnet, dass**
dieses monohalogenierte Kohlenwasserstoff-Lösemittel wenigstens ein Lösemittel ist, ausgewählt aus 1-Chlorpropan und 1-Chlorbutan.

4. Verfahren nach Anspruch 3,
**dadurch gekennzeichnet, dass**
dieses monohalogenierte Kohlenwasserstoff-Lösemittel 1-Chlorbutan ist.

5. Verfahren nach Anspruch 1,
**dadurch gekennzeichnet, dass**
dieses halogenfreie Kohlenwasserstoff-Lösemittel Hexan und/oder Methylcyclohexan ist.

6. Verfahren nach einem der Ansprüche 1 bis 5,
**dadurch gekennzeichnet, dass**
diese, der allgemeinen Formel (1) entsprechende Verbindung Bis-(1-chlor-1-methylethyl)benzol [C₆H₄(C(CH₃)₂Cl)₂] ist.

7. Verfahren nach einem der Ansprüche 1 bis 6,
**dadurch gekennzeichnet, dass**
diese Monomerkomponente, deren Hauptmonomer nicht Isobutylen ist, eine Monomerkomponente ist, die als ein Hauptmonomer ein aromatisches Vinylmonomer enthält.

8. Verfahren nach Anspruch 7,
**dadurch gekennzeichnet, dass**
dieses aromatische Vinylmonomer wenigstens ein Vinylmonomer ist, ausgewählt aus Styrol, p-Methylstyrol, α-Methylstyrol und Inden.

9. Verfahren nach Anspruch 7 oder 8,
**dadurch gekennzeichnet, dass**
dieses Isobutylen-Blockcopolymer wenigstens ein Blockcopolymer ist, ausgewählt aus
- einem Drei-Segment-Copolymer, aufgebaut aus
-- einem Polymersegment, das hauptsächlich aus dem aromatischen Vinylmonomer erhalten ist,
-- einem weiteren Polymersegment, das hauptsächlich aus dem monomeren Isobutylen erhalten ist, und aus
-- einem weiteren Polymersegment, das hauptsächlich aus dem aromatischen Vinilmonomer erhalten ist;
- einem Zwei-Segment-Copolymer, aufgebaut aus
-- einem Polymersegment, das hauptsächlich aus dem aromatischen Vinylmonomer erhalten ist, und aus
-- einem Polymersegment, das hauptsächlich aus dem monomeren Isobutylen erhalten ist;
- einem sternförmig aufgebauten Blockcopolymer, das drei oder mehr Arme aus Polymersegment aufweist, wobei ein Polymersegment hauptsächlich aus dem aromatischen Vinylmonomer erhalten ist, und ein weiteres Polymersegment hauptsächlich aus dem monomeren Isobutylen erhalten ist.

## Revendications

1. Procédé de préparation d'un copolymère bloc d'isobutylène,
par polymérisation cationique
- d'un composant monomère dont l'isobutylène est le monomère principal pour la production d'un segment principalement composé de l'isobutylène monomère et
- d'un autre composant monomère dont le monomère principal n'est pas l'isobutylène, pour la production d'un segment polymère dont le monomère principal n'est pas formé à partir de l'isobutylène,
- en présence d'un composé
-- qui répond à la formule générale (1) suivante ;
-- qui réagit comme initiateur et
-- qui génère un cation carbonique en présence d'un acide Lewis, 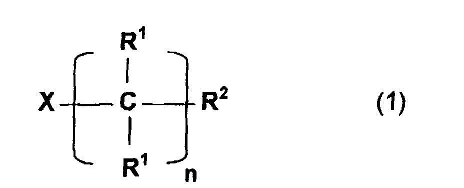
dans laquelle
plusieurs R¹ sont identiques ou non et représentent un atome d'hydrogène ou un groupe C₁₋₆-hydrocarbure univalent ;
R² représente un groupe hydrocarbure aromatique univalent ou polyvalent ou un groupe hydrocarbure aliphatique univalent ou polyvalent ;
X représente un atome d'halogène, un groupe C₁₋₆-alkoxyl ou un groupe C₁₋₆-acyloxyl ;
n correspond à la valence du groupe R² et est un nombre entier entre 1 et 6 ; et
plusieurs X pourront être identiques ou non si X est égal ou supérieur à deux ;
**caractérisé en ce que** :
cette polymérisation est réalisée dans un solvant mélangé contenant un solvant d'hydrocarbure monohalogéné et un solvant d'hydrocarbure non halogéné,
le solvant d'hydrocarbure non halogéné étant un C₃₋₈-hydrocarbure monohalogéné primaire et/ou un C₃₋₈-hydrocarbure monohalogéné secondaire,
le solvant d'hydrocarbure non halogéné comprenant au moins un solvant choisi parmi le hexane, le cyclohexane, le méthylcyclohexane, et l'éthylcyclohexane.

2. Procédé conformément à la revendication 1,
**caractérisé en ce que** :
le solvant d'hydrocarbure monohalogéné comprend au moins un solvant choisi parmi le 1-chloropropane, 1-chloro-2-méthylpropane, 1-chlorobutane, 1-chloro-2-méthylbutane, 1-chloro-3-méthylbutane, 1-chloro-2,2-diméthylbutane, 1-chloro-3,3-diméthylbutane, 1-chloro-2,3-diméthylbutane, 1-chloropentane, 1-chloro-2-méthylpentane, 1-chloro-3-méthylpentane, 1-chloro-4-méthylpentane, 1-chlorohexane, 1-chloro-2-méthylhexane, 1-chloro-3-méthylhexane, 1-chloro-4-méthylhexane, 1-chloro-5-méthylhexane, 1-chloroheptane, 1-chlorooctane, 2-chloropropane, 2-chlorobutane, 2-chloropentane, 2-chlorohexane, 2-chloroheptane, 2-chlorooctane et le chlorobenzène.

3. Procédé conformément à la revendication 2,
**caractérisé en ce que** :
le solvant d'hydrocarbure monohalogéné comprend au moins un solvant choisi parmi le 1-chloropropane et le 1-chlorobutane.

4. Procédé conformément à la revendication 3,
**caractérisé en ce que** :
le solvant d'hydrocarbure monohalogéné est le 1-chlorobutane.

5. Procédé conformément à la revendication 1,
**caractérisé en ce que** :
le solvant d'hydrocarbure non-halogéné est le hexane et/ou le méthylcyclohexane.

6. Procédé conformément à une des revendications 1 à 5,
**caractérisé en ce que** :
le composé de la formule générale (1) est le
Bis(1-chloro-1-méthyléthyl)benzène [C₆H₄(C(CH₃)₂Cl)₂].

7. Procédé conformément à une des revendications 1 à 6,
**caractérisé en ce que** :
le composant monomère dont le monomère principal n'est pas l'isobutylène, est un composant monomère principalement composé d'un monomère vinylique aromatique.

8. Procédé conformément à la revendication 5,
**caractérisé en ce que** :
le monomère vinylique aromatique est au moins un monomère vinylique choisi parmi le styrène, le p-méthylstyrène , le alpha-méthylstyrène et l'indène.

9. Procédé conformément à la revendication 7 ou 8,
**caractérisé en ce que** :
le copolymère bloc d'isobutylène comprend au moins un bloc copolymère choisi parmi
- un copolymère fait de trois segments composé
-- d'un segment polymère qui est formé principalement à partir du monomère vinylique aromatique,
-- d'un autre segment polymère qui est formé principalement à partir du monomère isobutylinique et
-- d'un autre segment polymère qui est formé principalement à partir du monomère vinylique aromatique ;
- un copolymère fait de deux segments composé
-- d'un segment polymère qui est formé principalement à partir du monomère vinylique aromatique et
-- d'un segment polymère qui est formé principalement à partir du monomère isobutylinique ;
- un copolymère bloc en étoile avec trois ou plusieurs branches composé d'un segment polymère, dont le monomère principal est formé à partir du monomère vinylique aromatique et un autre segment polymère dont le monomère principal est formé à partir du monomère isobutylinique .
